# EUROPEAN PATENT SPECIFICATION

(11) **EP 0 350 248 B1**
(45) Date of publication and mention of the grant of the patent: **07.04.1993**
(21) Application number: 89306749.6
(22) Date of filing: 03.07.1989
(51) Int. Cl.: C02F 1/04, B01D 3/34

(54) **Apparatus for treating photographic process waste liquor and method therefor**
Vorrichtung und Verfahren zur Aufbereitung von Abwasser aus Photoprozessen
Dispositif et méthode pour le traitement d'eau usée de procédés photographiques

(30) Priority: 08.07.1988 JP 170670/88
(43) Date of publication of application: 10.01.1990
(73) Proprietor: KONICA CORPORATION, Tokyo 163 (JP)
(72) Inventor: Kurematsu, Masayuki c/o Konica Corporation, Hino-shi Tokyo (JP); Koboshi, Shigeharu c/o Konica Corporation, Hino-shi Tokyo (JP); Goto, Nobutaka c/o Konica Corporation, Hino-shi Tokyo (JP)
(74) Representative: Wood, Anthony Charles

(56) References cited:
- WO-A-88/06912
- FR-A- 2 321 673
- US-A- 3 789 902
- PATENT ABSTRACTS OF JAPAN, vol. 12, no. 32 (P-661)[2879], 30th January 1988; & JP-A-62 184 459 (KONISHIROKU PHOTO IND. CO. LTD) 12-08-1987

## Description

### BACKGROUND OF THE INVENTION

This invention relates to an apparatus for treating waste liquor produced concomitantly with development processing of light-sensitive photographic materials using an automatic processing machine for photography (hereinafter abridged as "photographic process waste liquor" or "waste liquor") through evaporation and a method therefor, and, more particularly, to an apparatus for treating photographic process waste liquor, that is suited for treating the waste liquor by installing the apparatus inside the automatic processing machine or in the vicinity thereof and a method therefor.

In general, the photographic processing of light-sensitive silver halide photographic materials is carried out by combining steps employing processing solutions having one or more of the functions such as developing, fixing, washing, etc. in the case of black and white light-sensitive photographic materials. In the case of light-sensitive color photographic material processing, it includes color developing, bleach-fixing (or bleaching and fixing), washing, stabilizing, etc.

Then, in the photographic processing to process a large quantity of light-sensitive materials, there is employed a means by which the performance of processing solutions is constantly maintained by removing (while replenishing components consumed by the processing) components that may be thickened or concentrated during the processing by dissolving-out in the processing solution or by evaporation (for example, bromide ions in the developing solution, silver complex salts in the fixing solution, etc.). A replenishing solution is supplied to the processing solution for the purpose of the above replenishing, and a part of the processing solution is thrown away for the purpose of removing the above thickened or concentrated components in the photographic processing.

Recent years, because of environmental pollution or for economical reasons, replenishing solutions as well as washing water which is a replenishing solution for washing are undergoing a change such that they are used in a system in which the quantity of the replenishment has been greatly decreased. The photographic process waste liquor, however, is led from a processing tank of the automatic processing machine through a waste liquor pipe and thrown away in sewerages or the like after being diluted with waste liquor of washing water or cooling water for the automatic processing machine.

However, because of tightened regulation in recent years against environmental pollution, although it is possible to throw away washing water or cooling water in sewerages or rivers, it has been made substantially impossible to throw away the photographic processing solutions other than these [for example, developing solutions, fixing solutions, color-developing solutions, bleach-fixing solutions (or bleaching solutions or fixing solutions), stabilizing solutions, etc.]. For this reason, every photographic processing dealer has the waste liquor collected by dealers specialized in the waste liquor treatment, or installs equipment for pollution-preventive treatment. However, the way of placing the waste liquor treatment to dealers' care may necessarily require a considerable space for keeping the waste liquor stored and may also be very expensive from the viewpoint of cost. Also, the equipment for pollution-preventive treatment may involve disadvantages such that it requires a very large initial investment or initial cost and a considerably large space for repair or the like. Accordingly, in general, the waste liquor is collected by waste liquor collecting dealers, and made harmless after secondary and tertiary treatments. However, because of an increase in the cost for the collection, not only the fees for taking over the waste liquor is increasing year by year, but also the dealers are not willing to come to collect the waste liquor to miniature photofinishing laboratories because of its low collection efficiency, thus causing problems such that shops are full of waste liquor.

For the purpose of solving these problems and with an aim of making it possible to readily carry out the treatment of the photographic process waste liquor also in the miniature photofinishing laboratories, it has been researched to heat the photographic process waste liquor to carry out evaporation of water to dryness or effect solidification as disclosed, for example, in Japanese Utility Model Unexamined Publication No. 70841/1985.

Incidentally, in the case where the photographic process waste liquor is treated by evaporation, harmful or remarkably ill-smelling gas such as sulfur dioxide, hydrogen sulfide and ammonia gas are generated. This is caused by decomposition of sulfur series compounds used for or particular to the fixing solution and bleach-fixing solution contained in the photographic process waste liquor, for example, thiosulfates, sulfites, etc.

The present inventors have made various researches and experiments for removing the odor components, and then found that the photographic process waste liquor, which is concentrated by evaporation by applying heat with use of a heating means, is thermally decomposed when the evaporation temperature is high, resulting in generation of hydrogen sulfide, ammonia gas, etc. Moreover, the thermal decomposition causes rise of pressure in the evaporating means to reduce the durability of the evaporating means and whereby the material of the evaporating means is necessarily required to have been selected so that is has a predetermined quality, resulting in uprising of manufacturing cost.

### SUMMARY OF THE INVENTION

This invention has been made taking account of the above problems conventionally involved in the art, and an object of this invention is to provide an apparatus for treating photographic process waste liquor that can alleviate the generation of bad odor generated by the concentration by evaporation of the photographic process waste liquor, and, at the same time, to provide an apparatus for treating a photographic process waste liquor reduced in size and enhanced in durability, and a method therefor.
According to the invention there is provided a method for treating photographic processing waste liquor in which the liquor is heated by a heating means and concentrated by evaporation, characterized in that air is mixed with. the liquor and thereafter the liquor is separated from gas containing vapour generated by- heating the liquor.

There is also provided apparatus for treating photographic processing waste liquor in which the liquor is heated by a heating means and concentrated by evaporation, characterrized in that it includes mixing means for mixing air with the liquor and separating means for separating the gas containing vapour generated by heating the liquor.

By mixing the air with the photographic process waste liquor to be treated or having been treated as mentioned above, the evaporation temperature can be reduced easily and the generation of the bad odor by overheating can be effectively alleviated. Also, since the evaporation temperature is reduced thereby, the pressure in the apparatus can be reduced to enhance the safety of the apparatus and also make the miniaturization of the whole apparatus possible.

Moreover, the apparatus of this invention may be provided with a means for mixing the generated vapor or gas or the air containing the gas with the photographic process waste liquor in a circulating system for circulating the photographic process waste liquor to effect concentration by evaporation. For example, when the mixing is carried out in a pipe of the circulating system or in a sealed vessel, the heated photographic process waste liquor and an air containing the gas are diffused by turbulence to reduce the temperature of the photographic process waste liquor efficiently and depress the generation of hydrogen sulfide, ammonia gas and the like to a great extent.

Further, it is possible to provide with a means for removing condensate ingredients from the gas separated by the above-mentioned separating means, and also to provide a means for utilizing the gas having been removed the condensate ingredients therefrom by the above means as a part of the air to be used for mixing with the photographic process waste liquor. The vapor containing the gas obtained by concentration by evaporation of the photographic process waste liquor can be thereby separated into gas and distilled liquor, and the separated gas is mixed with the photographic process waste liquor in, for example, a pipe of the circulating system, to make the apparatus simple and depress the discharge of the odor gas to the outside.

### BRIEF DESCRIPTION OF THE DRAWINGS

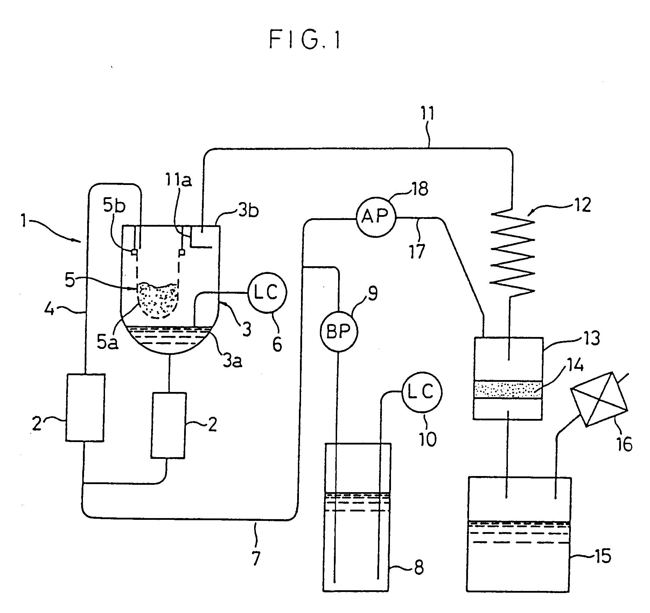

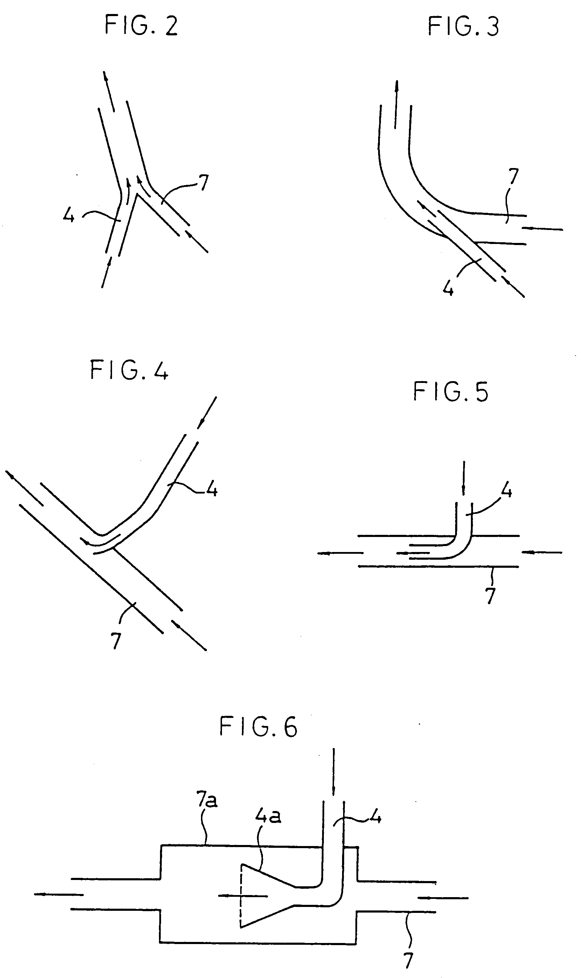

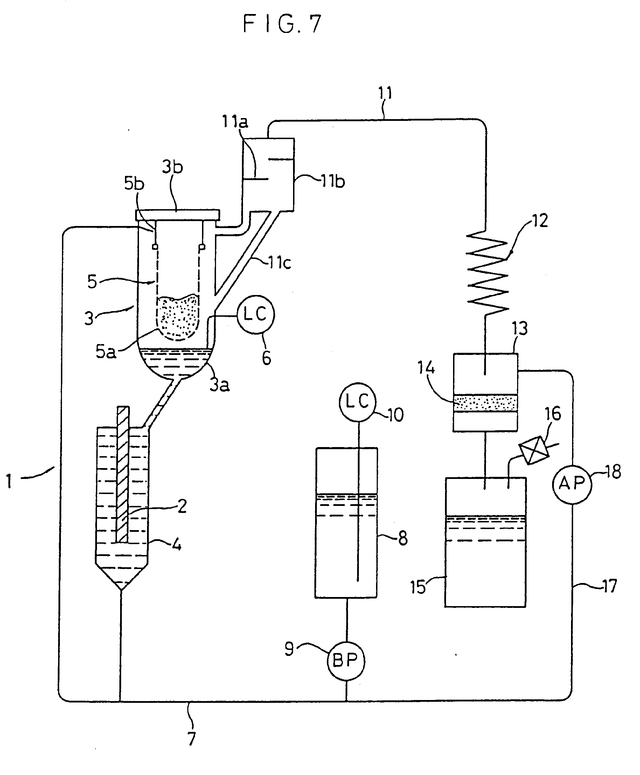

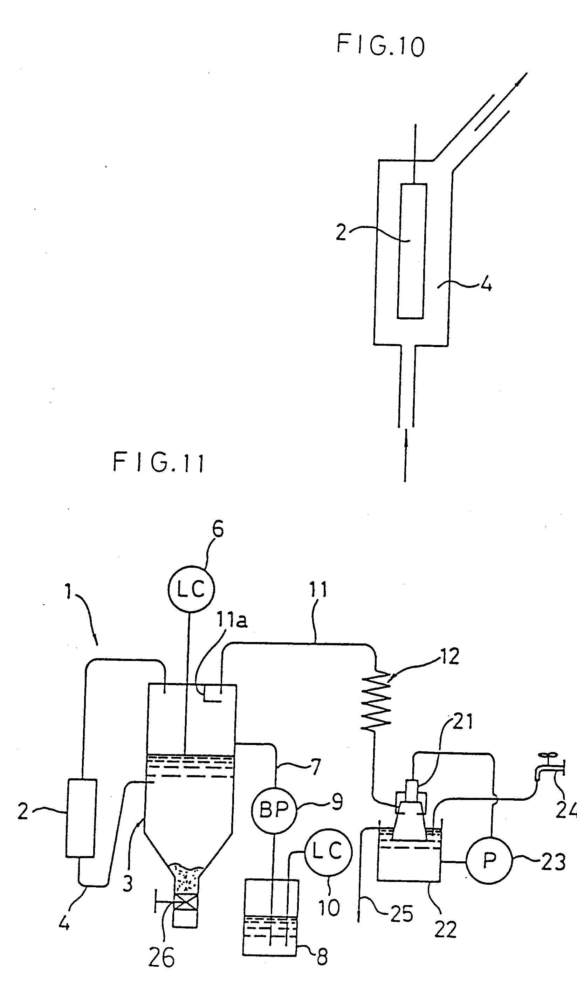

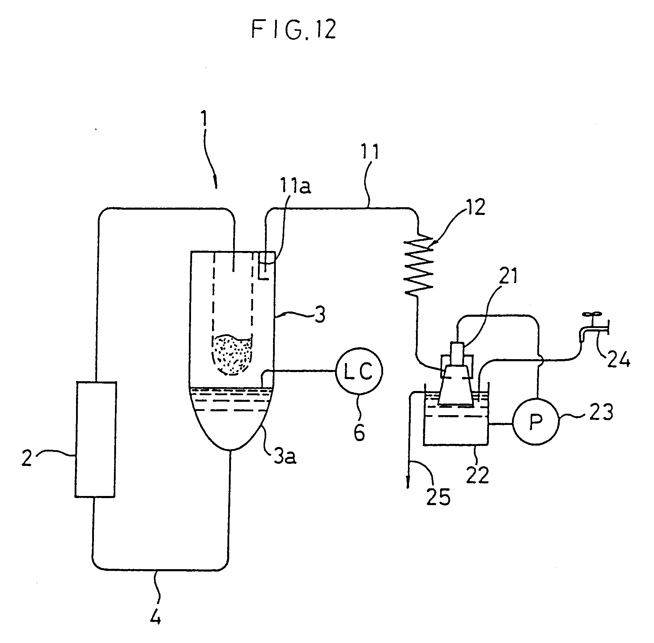

Fig. 1 is a schematic constitutional view showing the apparatus for treating the photographic process waste liquor of this invention; Figs. 2 to 6 are views showing examples of the mixing portions of pipes; Figs. 7 to 9 are schematic constitutional views showing other examples of the apparatuses for treating the photographic process waste liquor of this invention; Fig. 10 is a view showing an example of provision of the heating means; and Figs. 11 to 12 are schematic constitutional views showing other examples of the apparatuses for treating the photographic process waste liquor of this invention.

### DESCRIPTION OF THE PREFERRED EMBODIMENTS

Hereinafter, this invention will be described in detail by referring examples.

In the apparatus for treating the photographic process waste liquor according to this invention, as a means for mixing an air with the photographic process waste liquor to be treated or having been treated by heating, preferred is to mix the gas in a pipe of the circulating system.

Also, to the heat applying capacity of the heating means, the air flow rate should preferably be 0.1 to 100 lit./kcal, more preferably 1 to 20 lit./kcal.

The flow rate of gas, in the case of, for example, an apparatus having a treating capacity of about one gallon (about 3.78 liters) a day or an apparatus having a heater capacity of 2 kw, should preferably be 1 lit./min. or more, more preferably 10 to 1,000 lit./min., further preferably 40 to 300 lit./min. The mixing or incorporation of the air can prevent bumping of the photographic process waste liquor to reduce the evaporation temperature and inhibit generation of hydrogen sulfide, ammonia gas, etc.

Further, the air velocity in the pipe of the circulating system should preferably be 1 to 100 m/min., particularly preferably 5 to 30 m/min.

The heating means may comprise a nichrome wire, or may include worked-up heaters such as a cartridge heater, a quartz heater, a 'Teflon' heater, a rod heater and a panel heater or may be a heating means by using micro wave. The heating may be made by bringing a conductive material into directly contact with the photographic process waste liquor and supplying a current into the photographic process waste liquor through the conductive material and at the same time heat it. 'Teflon' is a registered trade mark.

The evaporation vessel may be made of any materials so long as they are heat-resistant materials such as heat-resistant glass, titanium, stainless steel, carbon steel, and heat-resistant plastic. However, from the viewpoints of the safety and corrosion resistance, preferred are stainless steel (preferably SUS 304 or SUS 316, particularly preferably) and titanium. The heating means may be provided at any position so long as it is possible to heat the waste liquor in the evaporating means.

The method for treating the photographic process waste liquor of this invention is characterized in conducting concentration by evaporation of the photographic process waste liquor by means of the apparatus for treating the photographic process waste liquor described above.

Typical examples of the photographic process waste liquor which can be subjected to the treatment of this invention are those described in the specification of Japanese Unexamined Patent Publication No. 38187/1989 the applicant previously filed. The treating apparatus of this invention is particularly effective when the photographic process waste liquor contains organic acid ferric complex salts thiosulfates, sulfites, ammonium salts and the like in large amounts, and particularly extremely effective when it contains organic acid ferric complex salts and thiosulfates.

As a preferred embodiment of this invention, this invention is suitable for processing, in the automatic processing machine or in the vicinity thereof, the photographic process waste liquor generated with the development processing of the light-sensitive photographic material from the automatic processing machine.

### Examples

Fig. 1 is a schematic constitutional view showing the apparatus of this invention for treating the photographic process waste liquor.

In the figure, the numeral 1 is a circulating system for the photographic process waste liquor, to which independently provided are heating means 2 for heating the photographic process waste liquor and a separating means 3 for separating the photographic process waste liquor and vapor containing the gas generated by heating. The heating means 2 is provided at the portion lower than the separating means 3.

The heating means 2 is provided around the periphery of a pipe 4 of the circulating system to heat the photographic process waste liquor from the outside of the pipe 4. The photographic process waste liquor is automatically circulated in the circulating system 1 by heating. The heating means 2 may be arranged inside the pipe 4 to directly heat the photographic process waste liquor as shown in Fig. 10.

Incidentally, the heating means 2 may be arranged at the portion upper than the separating means 3. In such case, the circulating system 1 is provided with a circulating pump to circulate the photographic process waste liquor forcedly.

The circulating system 1 may be formed such that only the portion, to which the heating means 2 is provided, may be made of heat-resistant material to make the apparatus inexpensive.

Moreover, by providing the heating means 2 to the circulating system 1, the evaporation area of the photographic process waste liquor can be made small and also overheating of the condensate is no more caused. Accordingly, odor gas generated by thermal decomposition of the condensate is reduced to a great extent and generation of hydrogen sulfide and sulfur series odor can be alleviated even if the concentration proceeds.

The above-mentioned separating means 3 is composed of a vessel having a predetermined volume. The vessel is made of plastic, titanium, etc. and is comprised of a vessel body 3a and a lid 3b.

Since the separating means 3 has a function of separating the photographic process waste liquor and the vapor containing a gas, it can be made small in capacity so long as it has the function, and also made of a material not having so high heat-resistance to reduce the manufacturing cost.

A taking-out means 5 is arranged inside the separating means 3, and is composed of a sludge filter 5a which is detachably supported by a vessel body 3a through a mounting member 5b. The heated photographic process waste liquor discharged from the pipe 4 of the circulating system 1 is fed to the separating means 3, and then separated into a vapor containing a gas and the concentrated photographic process waste liquor. The concentrated photographic process waste liquor is fed to the sludge filter 5a. From the sludge filter 5a, a filtrated condensate from which the water content has been removed is taken out.

The taking-out means may be constituted of a sludge filter arranged on the separating means, for example, cylindrical filter, filter bag, etc. whose opening size is 1 to 200 µm, or may be constituted such that the condensate is taken out by opening the valve arranged at the lower section of the separating means into a bag, etc.

The separating means 3 is provided with a liquid level detecting sensor 6 which observes the liquid amount of the photographic process waste liquor in the separating means 3. The pipe 4 of the circulating system 1 is connected to a waste water feeding tank 8 through a pipe 7, and the photographic process waste liquor is fed by actuating a bellows pump 9 arranged on the pipe 7.

The bellows pump 9 is controlled by the information of liquid level from the liquid level detecting sensor 6, and make the amount of the photographic process waste liquor in the circulating system 1 to be constant. The waste liquor feeding tank 8 is provided with a liquid level detecting sensor 10 to observe the remaining amount of the photographic process waste liquor. Once the amount becomes a predetermined amount, for example, the feeding of the waste liquor is automatically stopped or the operation is stopped. A discharging pipe 11 is connected to the upper portion of the separating means 3. From the discharging pipe 11, the separated vapor containing gas is discharged and led to an air chamber 13 through a cooling section 12. In the vicinity of the opening section of the discharging pipe 11, a baffle plate 11a is arranged to prevent direct discharge by dispersing of the liquid fed from the pipe 4 of the circulating system 1.

The gas cooled in the cooling section 12 is partially condensed in the air chamber 13 to be made a condensate liquid, and the odor components thereof is removed through an activated charcoal 14 and the condensate liquid is then stored in a stored liquid tank 15. The stored liquid tank 15 is open to air through a deodorant 16.

The gas separated from the condensate liquid remaining in the air chamber 13 and air are connected to the pipe 7 through an air pipe 17 to incorporate them into the circulating system 1 by the actuation of an air pump 18 provided to the air pipe 17.

As described above, the air flow rate should preferably be 1 lit./min. or more, more preferably 10 to 1,000 lit./min., further preferably 40 to 300 lit./min. The mixing or incorporation of the air can prevent bumping of the photographic process waste liquor to reduce the evaporation temperature and inhibit generation of hydrogen sulfide, ammonia gas, etc.

The air flow rate should preferably be from 0.024 to 24 litres per kilojoule, more preferably 0.24 to 48 litres per kilojoule based on the heat applying capacity.

Further, the air velocity in the pipe of the circulating system should preferably be 1 to 100 m/min., particularly preferably 5 to 30 m/min.

When the photographic process waste liquor is fed to the pipe 4 of the circulating system 1, the feeding is made through the pipe 7 by the actuation of the bellows pump 9 while the air pump 18 is stopped. Once the bellows pump 9 is stopped and feeding of the photographic process waste liquor is stopped, the incorporation of air to the pipe 4 of the circulating system 1 is made through pipes 17 and 7 by the actuation of the air pump 18. At that time, the photographic process waste liquor remaining in the pipe 7 is swept by air.

The connection or relation between the pipes 4 and 7 in the circulating system 1 is constituted as shown in Figs. 2 to 6. Either one of the pipes 4 for feeding the waste liquor and the pipe 7 for feeding air may be thicker than another. Namely, the relation in thickness between the pipes 4 and 7 is not limited to the embodiments shown in these drawings.

In Fig. 2, the pipe 4 for circulating the photographic process waste liquor and the pipe 7 for feeding the air are formed to have the same diameter, and also these join by the same angle at the mixing or incorporating section.

In Fig. 3, the diameter of the pipe 7 for feeding air is made to be larger than that of the pipe 4 for circulating the photographic process waste liquor, the angle defined by them at the mixing portion are made more acute than that shown in Fig. 2.

In Fig. 4, the pipe 7 for feeding air is made to be larger in diameter than that of the pipe 4 for circulating the photographic process waste liquor similarly as in Fig. 3, but the pipe 4 is made to join the pipe 7 by a substantial right angle.

In Fig. 5, the pipe 7 for feeding air is made to have a larger diameter than that of the pipe 4 for feeding the photographic process waste liquor similarly as in Fig. 4, and also the pipe 4 is made to join the pipe 7 by a substantial right angle, but the air from the pipe 4 is made to join the flow of the photographic process waste liquor at the substantially center portion of the photographic process waste liquor.

Fig. 6 shows an improved example of the apparatus shown in Fig. 5, in which the end portion 4a of the pipe 4 is formed in a trumpet shape from which the photographic process waste liquor is jetted and released to conduct the mixing of the photographic process waste liquor with the air further effectively. In this case, a small, sealed type box 7a is provided at a part of the pipe 7 to make the jetting easier.

This improvement can be applied to the means shown in Figs. 2 to 4.

In this invention, the heated photographic process waste liquor is circulated through the circulating system 1 and then mixed in the pipe 4 of the circulating system 1 with the supplied air containing a gas which is obtained by separation by means of the separating means 3, whereby the heated photographic process waste liquor and the air containing a gas are diffused by turbulence, resulting in an effective reduction of the temperature of the photographic process waste liquor and a large depression of the generation of odors such as hydrogen sulfide, ammonia gas, etc. to a great extent.

Moreover, since the evaporation temperature of the circulating system 1 is reduced, the pressure in the evaporation vessel is reduced, whereby not only the safety of the apparatus is improved, but also miniaturization of the whole apparatus is enabled.

In Fig. 7, a heating means 2 is arranged in the pipe 4 connected to the lower portion of the separating means 3 of the circulating system 1. On the upper portion of the separating means 3, provided is a discharging section 11b in which a baffle 11a is provided. The discharging section 11b is connected to the separating means 3 through a pipe 11c such that the photographic process waste liquor is returned to the separating means 3 from the discharging section 11b.

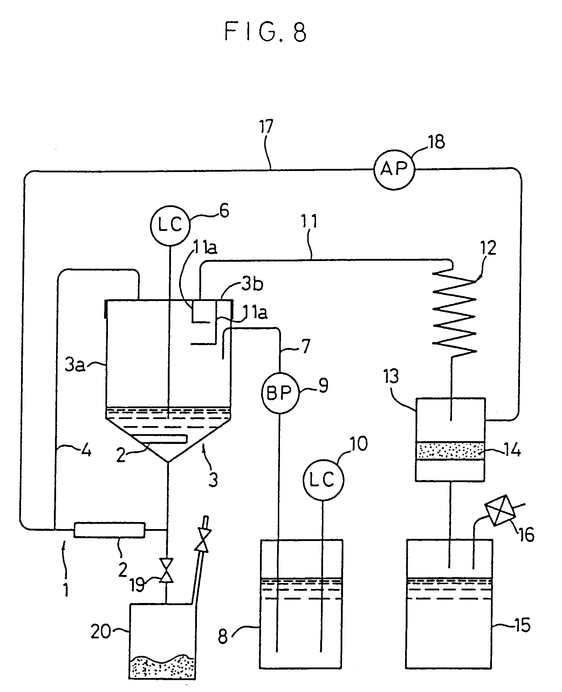

In Fig. 8, a waste liquor feeding tank 8 is connected to the separating means 3 through the pipe 7 such that the photographic process waste liquor may be supplied to the separating means 3 by actuating the bellows pump 9 provided in the pipe 7.

The air separated from the condensate liquid in a air chamber 13 is connected to the pipe 7 of the circulating system 1 through the air pipe 17 such that the air is incorporated to the circulating system 1 by the actuation of the air pump 18 provided in the air pipe 17.

Further, another heating means 2 is provided inside the separating means 3, and the condensate concentrated by evaporation in the circulating system 1 is discharged in a disposal vessel 20 by operation of a cock 19 through the pipe 4.

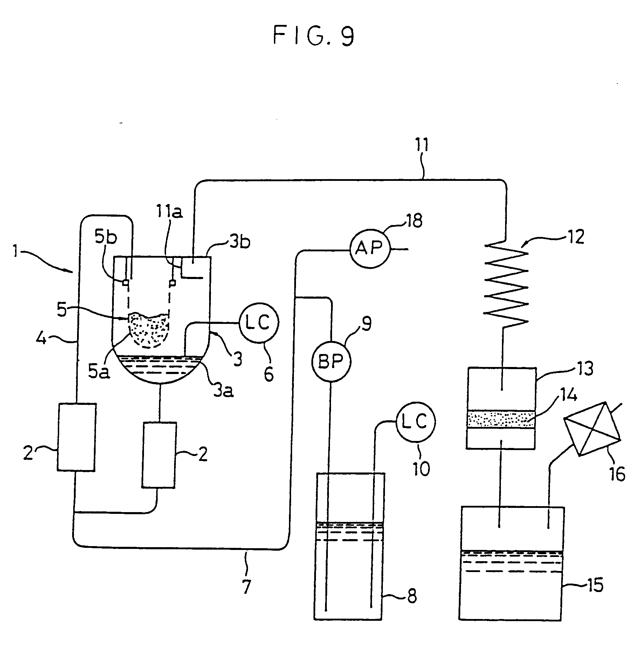

In Fig. 9, the air outside the apparatus is incorporated into the circulating system 1 by the actuation of the air pump 18 through the pipe 7. Also, the vapor containing a gas discharged from the separating means 3 is cooled in the cooling section 12, and a part of the cooled vapor is condensed by the air chamber 13 into a condensate liquid, then removed the odor components through the activated charcoal 14 and stored in the stored liquid tank 15. The stored liquid tank 15 is connected to the air through a deodorant 16 so that the distilled liquid may not be returned to the circulating system 1.

Fig. 10 shows an embodiment in which the heating means 2 is provided in the pipe 4.

In Fig. 11, a photographic process waste liquor in a predetermined amount is stored in the separating means 3 of the circulating system 1. The pipe 4 of the circulating system 1 is connected to the upper portion of the liquid-storing portion and the heating means 2 is arranged on the lower portion than the liquid-storing portion. A valve 26 which is a taking-out means is provided on the lower portion of the separating means 3 to take out the condensate stored in the separating means 3.

A water jet pump 21 is connected to a discharging pipe 11 to reduce the pressure in the circulating system 1 and whereby reduce the boiling temperature of the photographic process waste liquor to depress the generation of the odors, and also to mix the water fed from a water tank 22 by the pump 23 with the gas discharged from the discharging pipe 11 for deodorization. Into the water tank 22, a water is constantly supplied from a tap 24 and the overflowed water is discharged from an overflow pipe 25.

Fig. 12 is an embodiment employing the circulating system shown in Fig. 1 instead of the circulating system shown in Fig. 11 and the others in the construction is the same as shown in Fig. 11.

As described above, the apparatus of this invention for treating the photographic process waste liquor and the method therefor can easily reduce the evaporation temperature and effectively alleviate the generation of bad odor due to overheating by mixing an air with the photographic process waste liquor to be treated or having been treated. Moreover, since the evaporation temperature is reduced, the pressure in the evaporation vessel is reduced to enhance the safety of the apparatus and also enable the miniaturization of the whole apparatus.

Further, since the generated vapor or gas or an air containing them is mixed with the photographic process waste liquor in the circulating system in which concentration by evaporation is carried out while the photographic process waste liquor is circulated therein, the heated photographic process waste liquor and the air are diffused by turbulence to reduce the temperature of the photographic process waste liquor effectively and depress the generation of odors such as hydrogen sulfide, ammonia gas, etc to a great extent.

Moreover, according to this invention in which, the condensate components is removed from the air having been separated in the separating means, the air having been removed the condensate components is used as an air for mixing with the photographic process waste liquor, the vapor containing a gas obtained by concentration by evaporation of the photographic process waste liquor is separated into a gas and a vapor, and the separated gas is mixed with the photographic process waste liquor in the pipe of the circulating system, the apparatus is made to be simple and the discharge of the odor gas to the outside is inhibited. In this case, the overheating of the condensate by heating means is no more caused, whereby the overheating of the condensate is prevented and the generation of the odors such as hydrogen sulfide, ammonia gas, etc. is depressed.

Also, the heating means and separating means are independently provided to the circulating system and whereby these means each can be made smaller to make the apparatus smaller. Further, the portion required to be made of the heat-resistant material is only the part to which the heating means is provided in the circulating system, resulting in alleviation of the heat-resistant portion and making the apparatus inexpensive.

Moreover, the provision of the taking-out means to the separating means for taking out the condensate can discharge the condensate, prevent overheating of the condensate and depress the generation of odors.

## Claims

1. A method for treating photographic processing waste liquor in which the liquor is heated by a heating means and concentrated by evaporation, characterized in that air is mixed with the liquor and thereafter the liquor is separated from gas containing vapour generated by heating the liquor.

2. The method according to claim 1, characterized in that the liquor is circulated in a circulating system during heating and concentration.

3. The method according to claim 2, characterized in that the air is mixed with. the liquor in the circulating system.

4. The method according to claim 1, characterized in that the condensate component is removed from the gas containing vapour.

5. The method according to claim 4, characterized in that the gas separated from the condensate liquid is incorporated into the circulating system.

6. The method according to claim 2, characterized in that heating means is provided in the circulating system.

7. The method according to claim 2, characterized in that the air flow rate into the circulating system is equal to or greater than 1 litre per minute.

8. The method according to claim 7, characterized in that the air flow rate into the circulating system is from 10 to 100 litres per minute.

9. The method according to claim 8, characterized in that the air flow rate into the circulating system is from 40 to 300 litres per minute.

10. The method according to claim 2, characterized in that the air flow rate into the circulating system is from 0.024 to 24 litres per kilojoule based on the heat applying capacity of the heating means.

11. The method according to claim 10, characterized in that the air flow rate into the circulating system is from 0.24 to 48 litres per kilojoule based on the heat applying capacity of the heating means.

12. The method according to claim 2, characterized in that the air velocity in the circulating system is from 1 to 100 metres per minute.

13. The method according to claim 12, characterized in that the air velocity in the circulating system is from 5 to 30 metres per minute.

14. An apparatus for treating photographic processing waste liquor in which the liquor is heated by a heating means (2) and concentrated by evaporation, characterized in that it includes mixing means (7) for mixing air with the liquor and separating means (3) for separating the gas containing vapour generated by heating the liquor.

15. The apparatus according to claim 14, characterized in that it includes a circulating system (1) for circulating the liquor during concentration by evaporation.

16. The apparatus according to claim 14, characterized in that it includes means (12, 13) for removing the condensate component from the gas containing vapour.

17. The apparatus according to claim 14, characterized in that it includes means (17) for incorporating the gas separated from the condensate liquid into the circulating system.

## Patentansprüche

1. Verfahren zur Aufbereitung von photographischem Verarbeitungsabwasser, bei dem man das Abwasser mittels einer Heizvorrichtung erhitzt und durch Verdampfen konzentriert, dadurch gekennzeichnet, daß man Luft mit dem Abwasser vermischt und dieses anschließend von bei dessen Erhitzen entstandenem, dampfhaltigem Gas trennt.

2. Verfahren nach Anspruch 1, dadurch gekennzeichnet, daß man das Abwasser während des Erhitzens und Konzentrierens im Kreislauf durch ein Umlaufsystem führt.

3. Verfahren nach Anspruch 2, dadurch gekennzeichnet, daß man die Luft mit dem Abwasser im Umlaufsystem vermischt.

4. Verfahren nach Anspruch 1, dadurch gekennzeichnet, daß man die Kondensatkomponente aus dem dampfhaltigen Gas entfernt.

5. Verfahren nach Anspruch 4, dadurch gekennzeichnet, daß man das aus der Kondensatflüssigkeit abgetrennte Gas in das Umlaufsystem einführt.

6. Verfahren nach Anspruch 2, dadurch gekennzeichnet, daß Heizvorrichtungen im Umlaufsystem vorgesehen sind.

7. Verfahren nach Anspruch 2, dadurch gekennzeichnet, daß die in das Umlaufsystem einströmende Luftmenge gleich oder größer als 1 Liter pro Minute ist.

8. Verfahren nach Anspruch 7, dadurch gekennzeichnet, daß die in das Umlaufsystem einströmende Luftmenge 10 bis 100 Liter pro Minute beträgt.

9. Verfahren nach Anspruch 8, dadurch gekennzeichnet, daß die in das Umlaufsystem einströmende Luftmenge 40 bis 300 Liter pro Minute beträgt.

10. Verfahren nach Anspruch 2, dadurch gekennzeichnet, daß die in das Umlaufsystem einströmende Luftmenge 0,024 bis 24 Liter pro Kilojoule, bezogen auf die Wärmelieferkapazität der Heizvorrichtung, beträgt.

11. Verfahren nach Anspruch 10, dadurch gekennzeichnet, daß die in das Umlaufsystem einströmende Luftmenge 0,24 bis 48 Liter pro Kilojoule, bezogen auf die Wärmelieferkapazität der Heizvorrichtung, beträgt.

12. Verfahren nach Anspruch 2, dadurch gekennzeichnet, daß die Luftgeschwindigkeit im Umlaufsystem 1 bis 100 Meter pro Minute beträgt.

13. Verfahren nach Anspruch 12, dadurch gekennzeichnet, daß die Luftgeschwindigkeit im Umlaufsystem 5 bis 30 Meter pro Minute beträgt.

14. Vorrichtung zur Aufbereitung von photographischem Verarbeitungsabwasser, in der man das Abwasser mittels einer Heizvorrichtung (2) erhitzt und durch Verdampfen konzentriert, dadurch gekennzeichnet, daß sie Mischeinrichtungen (7) zum Vermischen von Luft mit der Flüssigkeit und Trenneinrichtungen (3) zum Abtrennen des durch Erhitzen des Abwassers erzeugten dampfhaltigen Gases enthält.

15. Vorrichtung nach Anspruch 14, dadurch gekennzeichnet, daß sie ein Umlaufsystem (1) zur Kreislaufführung des Abwassers während des Konzentrierens durch Verdampfen enthält.

16. Vorrichtung nach Anspruch 14, dadurch gekennzeichnet, daß sie Mittel (12, 13) zur Entfernung der Kondensatkomponente aus dem dampfhaltigen Gas enthält.

17. Vorrichtung nach Anspruch 14, dadurch gekennzeichnet, daß sie Mittel (17) zur Einführung des aus der Kondensatflüssigkeit abgetrennten Gases in das Umlaufsystem enthält.

## Revendications

1. Procédé de traitement d'une liqueur usée de procédé photographique, dans lequel la liqueur est chauffée par un moyen de chauffage et concentrée par évaporation, caractérisé en ce que de l'air est mélangé avec la liqueur, puis la liqueur est séparée de la vapeur contenant des gaz produite par le chauffage de la liqueur.

2. Procédé selon la revendication 1, caractérisé en ce que la liqueur circule dans un système de circulation pendant le chauffage et la concentration.

3. Procédé selon la revendication 2, caractérisé en ce que l'air est mélangé avec la liqueur dans le système de circulation.

4. Procédé selon la revendication 1, caractérisé en ce que le constituant condensat est éliminé de la vapeur contenant des gaz.

5. Procédé selon la revendication 4, caractérisé en ce que le gaz séparé du condensat liquide est incorporé dans le système de circulation.

6. Procédé selon la revendication 2, caractérisé en ce qu'un moyen de chauffage est placé dans le système de circulation.

7. Procédé selon la revendication 2, caractérisé en ce que le débit d'air dans le système de circulation est égal ou supérieur à 1 litre par minute.

8. Procédé selon la revendication 7, caractérisé en ce que le débit d'air dans le système de circulation est de 10 à 100 litres par minute.

9. Procédé selon la revendication 8, caractérisé en ce que le débit d'air dans le système de circulation est de 40 à 300 litres par minute.

10. Procédé selon la revendication 2, caractérisé en ce que le débit d'air dans le système de circulation est de 0,024 à 24 litres par kilojoule, rapporté à la capacité de chauffage du moyen de chauffage.

11. Procédé selon la revendication 10, caractérisé en ce que le débit d'air dans le système de circulation est de 0,24 à 48 litres par kilojoule, rapporté à la capacité de chauffage du moyen de chauffage.

12. Procédé selon la revendication 2, caractérisé en ce que la vitesse de l'air dans le système de circulation est de 1 à 100 mètres par minute.

13. Procédé selon la revendication 12, caractérisé en ce que la vitesse de l'air dans le système de circulation est de 5 à 30 mètres par minute.

14. Appareil pour traiter une liqueur usée de procédé photographique dans lequel la liqueur est chauffée par un moyen de chauffage (2) et concentrée par évaporation, caractérisé en ce qu'il comprend un moyen de mélange (7) pour mélanger l'air avec la liqueur et un moyen de séparation (3) pour séparer la vapeur contenant des gaz produite par le chauffage de la liqueur.

15. Appareil selon la revendication 14, caractérisé en ce qu'il comprend un système de circulation (1) pour faire circuler la liqueur pendant la concentration par évaporation.

16. Appareil selon la revendication 14, caractérisé en ce qu'il comporte un moyen (12, 13) pour éliminer le constituant condensat de la vapeur contenant des gaz.

17. Appareil selon la revendication 14, caractérisé en ce qu'il comporte un moyen (17) pour incorporer dans le système de circulation le gaz séparé du condensat liquide.
